# EUROPEAN PATENT SPECIFICATION

(11) **EP 3 718 943 B1**
(45) Date of publication and mention of the grant of the patent: **12.01.2022**
(21) Application number: 20165451.4
(22) Date of filing: 25.03.2020
(51) Int. Cl.: B66B 5/00

(54) **REAL-TIME MONITORING SYSTEM, ELEVATOR OR ESCALATOR COMPRISING THE SAME, AND A METHOD THEREFOR**
ECHTZEITÜBERWACHUNGSSYSTEM, AUFZUG ODER FAHRTREPPE DAMIT UND VERFAHREN DAFÜR
SYSTÈME DE SURVEILLANCE EN TEMPS RÉEL, ASCENSEUR OU ESCALATEUR LE COMPRENANT ET PROCÉDÉ ASSOCIÉ

(30) Priority: 26.03.2019 CN 201910231351
(43) Date of publication of application: 07.10.2020
(73) Proprietor: KONE Elevators Co., Ltd., Kunshan Jiangsu (CN); KONE Corporation, 00330 Helsinki (FI)
(72) Inventor: YE, Tao, Kunshan, Jiangsu (CN); PU, Chengdong, Kunshan, Jiangsu (CN); YU, Weibin, Kunshan, Jiangsu (CN)
(74) Representative: Kolster Oy Ab

(56) References cited:
- WO-A1-2010/016827
- WO-A1-2018/100609
- CN-A- 106 892 310

## Description

### FIELD OF THE INVENTION

The invention relates to a real-time monitoring system for an elevator or an escalator, an elevator or an escalator comprising the same, and a method for real-time monitoring of the elevator or the escalator.

### BACKGROUND OF THE INVENTION

An elevator or escalator comprises a control system that performs control of the elevator or escalator. If the monitoring system needs to obtain information from the control system in real time, or the monitoring system needs accurate statistics of the elevator or escalator, RS232/485 or other devices are usually used to connect the monitoring system and the control system to retrieve information from the controller in real time. However, there are too many kinds of controllers on the market, and even controllers made by the same manufacturer may cause differences in communication protocols due to different software versions, which limits the applicability of many existing monitoring systems. Furthermore, if the communication is not designed properly, the interaction of the monitoring system with the control system may bring a risk of an unexpected stop of units. Therefore, a universal monitoring method is urgently needed without too much relying on the software and hardware of the control system.

WO2018100609A1 discloses an elevator control device that drives and controls an elevator; and a remote recovery device that communicates with the elevator control device and causes the elevator control device to perform a failure recovery operation for the elevator. WO2010016827A1 discloses a system for communicating information regarding a passenger carrying installation between an individual at a site of the installation and an individual at a different location remote from the installation site. CN106892310A discloses an elevator remote monitoring system that can show the elevator running information in real time.

### BRIEF DESCRIPTION OF THE INVENTION

In view of the above problems, the present invention provides a real-time monitoring system for an elevator or an escalator, the elevator or escalator comprises a control system arranged in a control cabinet, the control system comprises a screen configured to display control information, the real-time monitoring system is arranged in the control cabinet, and comprises: a camera configured to capture an image of the screen in real time; a visual information processing board configured to recognize the captured image as corresponding text data, and process the text data to form a message to be transmitted; and a data transfer unit configured to transmit the message from the visual information processing board to a cloud, wherein the cloud determines whether the elevator or the escalator needs maintenance according to the message, and when the cloud determines that the elevator or escalator needs maintenance, an alarm is issued and/or a maintenance person is assigned to the maintenance.

This technical solution completely isolates communication over ports of any control system, thus avoiding all risks that cause unexpected problems to the units. And because the visual recognition only depends on the information display inside the control cabinet, the information display exists in most cases no matter which manufacturer. Therefore, this technical solution can cover almost all elevators and escalators, and is suitable for almost all types of controllers, as long as the information display exists. Further, because the monitoring system is physically isolated from the control system, it can be used with the device more securely without adding more computing effort. Furthermore, logic can be constructed to implement actions in different situations based on urgency level to perform more efficient maintenance of the elevator or escalator.

According to the real-time monitoring system of the present invention, the disclosure of each of the following paragraphs may be provided individually or in combination.

According to an embodiment of the real-time monitoring system of the present invention, the visual information processing board includes a database associating a predetermined image having a specific feature with corresponding text data such that the visual information processing board recognizes the captured image as corresponding text data by comparison between the captured image and the predetermined image.

With this database, visual recognition becomes simpler. The recognition can be realized quickly by comparing specific features of the predetermined image and the captured image.

According to an embodiment of the real-time monitoring system of the present invention, the control information comprises running status information and/or fault event information.

Thus the monitoring system can monitor the running status and/or failure events of the elevator or escalator in real time.

According to an embodiment of the real-time monitoring system of the present invention, the processing of the text data by the visual information processing board comprises integrating successive identical text data for a predetermined time to avoid repeated message transmission.

By integrating successive identical text data, repeated message transmission can be avoided, thereby reducing the frequency of sending messages and saving subsequent calculations and processing efforts.

According to an embodiment of the real-time monitoring system of the present invention, the visual information processing board is further configured to store the image and the text data, and the visual information processing board is further configured to calculate statistical data and make the statistical data as part of the message, the statistical data comprises fault duration, running up time, running down time, and/or stopping service time

The storage of real-time images leads to the fact that real-time images can be provided as true evidences when examining fault events or reviewing occurrences. The storage of text data can be used for subsequent data processing and data statistics.

The statistical data obtained by statistical calculation of historical data can evaluate the status of the elevator or escalator, and serve as the basis for the maintenance of the elevator or escalator.

According to an embodiment of the real-time monitoring system of the present invention, the data transfer unit transmits a message to the cloud through 2G/3G/4G/5G.

Messages can be transmitted over long distances, enabling subsequent actions, including timely notification to management and maintenance personnel.

According to an embodiment of the real-time monitoring system of the present invention, the camera is positioned to directly align with the screen, or the real-time monitoring system further comprises a mirror configured to project an image of the screen to the camera such that the camera is indirectly aligned with the screen.

Depending on the space in the control cabinet, the camera can be directly or indirectly aligned with the screen. The use of the mirror can enable the camera to take photos in a control cabinet with a small space.

According to an embodiment of the real-time monitoring system of the present invention, the real-time monitoring system further comprises a bracket, the camera is mounted on the bracket such that the camera can move horizontally and/or vertically and/or rotate by the bracket in order to align with the screen.

The bracket is used to ensure that the camera is aligned with the screen, and the position of the camera can be adjusted after a period of use.

According to an embodiment of the real-time monitoring system of the present invention, the camera captures an image in a frequency range of every 0.1 second to every 1 second.

By properly setting the frequency to capture images, all events can be recorded while saving energy.

The invention also provides an elevator or escalator, comprising the above-mentioned real-time monitoring system.

The invention also provides a method for real-time monitoring an elevator or escalator, the elevator or escalator comprises a control system arranged in a control cabinet, the control system comprises a screen configured to display control information, the method comprising: capturing an image of the screen in real time by a camera disposed in the control cabinet; recognizing the captured image as corresponding text data by a visual information processing board disposed in the control cabinet, and processing the text data to form a message to be transmitted; and transmitting the message from the visual information processing board to a cloud by a data transfer unit disposed in the control cabinet, wherein the cloud determines whether the elevator or escalator needs maintenance according to the message, and when the cloud determines that the elevator or escalator needs maintenance, an alarm is issued and/or a maintenance person is assigned to the maintenance.

This method completely isolates communication over ports of any control system, thus avoiding all risks that cause unexpected problems to the units. And because the visual recognition only depends on the information display inside the control cabinet, the information display exists in most cases no matter which manufacturer. Therefore, this technical solution can cover almost all elevators and escalators, and is suitable for almost all types of controllers, as long as the information display exists. Further, because the monitoring system is physically isolated from the control system, it can be used with the device more securely without adding more computing effort. Furthermore, logic can be constructed to implement actions in different situations based on urgency level to perform more efficient maintenance of the elevator or escalator.

According to an embodiment of the method of the present invention, the visual information processing board includes a database associating a predetermined image having a specific feature with corresponding text data, the method further comprises: recognizing the captured image as corresponding text data through comparison between the captured image and the predetermined image by the visual information processing board.

With this database, visual recognition becomes simpler. The recognition can be realized quickly by comparing specific features of the predetermined image and the captured image.

According to an embodiment of the method of the present invention, the control information comprises running status information and/or fault event information.

Thus the monitoring system can monitor the running status and/or failure events of the elevator or escalator in real time.

According to an embodiment of the method of the present invention, the processing of the text data by the visual information processing board comprises integrating successive identical text data for a predetermined time to avoid repeated message transmission.

By integrating successive identical text data, repeated message transmission can be avoided, thereby reducing the frequency of sending messages and saving subsequent calculations and processing efforts.

According to an embodiment of the method of the present invention, the method further comprises storing the image and the text data by the visual information processing board, calculating statistical data and making the statistical data as part of the message by the visual information processing board, the statistical data comprises fault duration, running up time, running down time, and/or stopping service time.

The storage of real-time images leads to the fact that real-time images can be provided as true evidences when examining fault events or reviewing occurrences. The storage of text data can be used for subsequent data processing and data statistics.

The statistical data obtained by statistical calculation of historical data can evaluate the status of the elevator or escalator, and serve as the basis for the maintenance of the elevator or escalator.

According to an embodiment of the method of the present invention, the data transfer unit transmits a message to the cloud through 2G / 3G / 4G / 5G.

Messages can be transmitted over long distances, enabling subsequent actions, including timely notification to management and maintenance personnel.

According to an embodiment of the method of the present invention, the camera is positioned to directly align with the screen, or the real-time monitoring system further comprises a mirror configured to project an image of the screen to the camera such that the camera is indirectly aligned with the screen.

Depending on the space in the control cabinet, the camera can be directly or indirectly aligned with the screen. The use of the mirror can enable the camera to take photos in a control cabinet with a small space.

According to an embodiment of the method of the present invention, the camera is mounted on a bracket such that the camera can move horizontally and/or vertically and/or rotate by the bracket in order to align with the screen.

The bracket is used to ensure that the camera is aligned with the screen, and the position of the camera can be adjusted after a period of use.

According to an embodiment of the method of the present invention, the camera captures an image in a frequency range of every 0.1 second to every 1 second.

By properly setting the frequency to capture images, all events can be recorded while saving energy.

### BRIEF DESCRIPTION OF THE DRAWINGS

In order to explain the technical solution of the embodiment of the present invention more clearly, the drawings of the embodiment of the present invention will be briefly introduced below. Among them, the drawings are only used to show some embodiments of the present invention, rather than limiting all the embodiments of the present invention.
FIG. 1 is a schematic diagram of a real-time monitoring system according to the present invention.
FIG. 2 is a schematic diagram of a camera according to the present invention using a mirror to indirectly align with a screen.

### DETAILED DESCRIPTION

In order to make the objectives, technical solutions, and advantages of the technical solutions of the present invention clearer, the technical solutions of the embodiments of the present invention will be clearly and completely described below with reference to the accompanying drawings of specific embodiments of the present invention. The same reference numerals in the drawings represent the same components. It should be noted that the described embodiments are a part of the embodiments of the present invention, but not all the embodiments. Based on the described embodiments of the present invention, all other embodiments obtained by those skilled in the art without creative labor shall fall within the scope of the appended claims.

Unless otherwise defined, the technical or scientific terms used herein shall have the ordinary meanings understood by those skilled in the art. The terms "first", "second" and similar words used in the specification and claims of the present invention do not indicate any order, quantity, or importance, but are only used to distinguish different components. Similarly, similar words such as "a" or "an" do not necessarily indicate a limit on quantity. Words such as "including" or "comprising" mean that the element or item appearing before the word encompasses the element or item appearing after the word and its equivalent without excluding other elements or items. Words such as "connected" or "connecting" are not limited to physical or mechanical connections, but may include electrical connections, whether direct or indirect. "Up", "down", "left", "right", etc. are only used to indicate the relative position relationship. When the absolute position of the described object changes, the relative position relationship may also change accordingly.

The present invention is described in detail below by way of describing example embodiments.

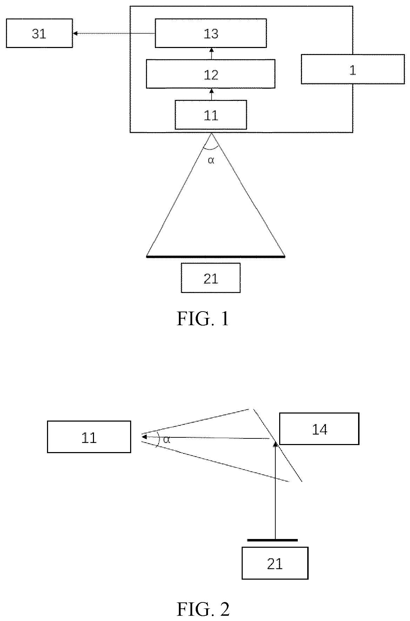

FIG. 1 is a schematic diagram of a real-time monitoring system 1 according to the present invention. The real-time monitoring system 1 is used for an elevator or an escalator. The elevator or escalator comprises a control system arranged in a control cabinet, the control system comprises a screen 21 configured to display control information. The real-time monitoring system 1 is arranged in the control cabinet, and comprises: a camera 11 configured to capture an image of the screen 21 in real time; a visual information processing board 12 configured to recognize the captured image as corresponding text data, and process the text data to form a message to be transmitted; and a data transfer unit 13 configured to transmit the message from the visual information processing board 12 to a cloud 31. Wherein the cloud 31 determines whether the elevator or the escalator needs maintenance according to the message.

This design of the real-time monitoring system 1 completely isolates communication over ports of any control system, thus avoiding all risks that cause unexpected problems to the units. And because the visual recognition only depends on the information display inside the control cabinet, the information display exists in most cases no matter which manufacturer. Therefore, this real-time monitoring system 1 can cover almost all elevators and escalators, and is suitable for almost all types of controllers, as long as the information display exists. Further, because the real-time monitoring system 1 is physically isolated from the control system, it can be used with the device more securely without adding more computing effort.

It can be understood that the camera 11, the visual information processing board 12, and the data transfer unit 13 of the real-time monitoring system 1 may communicate with each other in a wired or wireless manner. For example, the camera 11 is connected to the visual information processing board 12 in a wired manner. The visual information processing board 12 is connected to the data transfer unit 13 in a wireless manner (such as WiFi, Bluetooth, etc.).

According to the present invention, when the cloud 31 determines that the elevator or escalator needs maintenance, an alarm is issued and/or a maintenance person Z is assigned to the maintenance. Logic may be constructed to implement actions in different situations based on urgency level to perform more efficient maintenance of the elevator or escalator. For example, faults can be classified into different levels. When a fault with high urgency level occurs, a maintenance person is assigned for immediate emergency rescue. When a fault with low urgency level occurs, a maintenance person may be ordered to make it done within a specified period of time.

Preferably, the visual information processing board 12 may include a database associating a predetermined image having a specific feature with corresponding text data such that the visual information processing board 12 recognizes the captured image as corresponding text data by comparison between the captured image and the predetermined image. With this database, visual recognition becomes simpler. The recognition can be realized quickly by comparing specific features of the predetermined image and the captured image. For example, when a fault occurs, the screen usually displays a fault code indicating the fault. The fault code is usually a number having a few digits, for example, a two digit number. Then, the database can associate an image displaying the two digit number with a text of this two digit number. In this way, when the fault code is displayed on the screen, for example, the image of 23 is displayed, the visual information processing board 12 can quickly recognize the image of the displayed 23 as text data of "23" through the association relationship of the database.

Preferably, the control information may comprise running status information and/or fault event information. Thus the monitoring system can monitor the running status and/or failure events of the elevator or escalator in real time. In fact, the real-time monitoring system 1 can monitor all the control information displayed on the screen by the control system in real time.

Preferably, the processing of the text data by the visual information processing board 12 may comprise integrating successive identical text data for a predetermined time to avoid repeated message transmission. By integrating successive identical text data, repeated message transmission can be avoided, thereby reducing the frequency of sending messages and saving subsequent calculations and processing efforts.

Preferably, the visual information processing board may be further configured to store the image and the text data. The storage of real-time images leads to the fact that real-time images can be provided as true evidences when examining fault events or reviewing occurrences. The storage of text data can be used for subsequent data processing and data statistics.

Preferably, the visual information processing board 12 may be further configured to calculate statistical data and make the statistical data as part of the message, the statistical data comprises fault duration, running up time, running down time, and/or stopping service time. The statistical data obtained by statistical calculation of historical data can evaluate the status of the elevator or escalator, and serve as the basis for the maintenance of the elevator or escalator. For example, the visual information processing board 12 may calculate the actual running time of an escalator in a shopping mall. The running time does not include the downtime of the escalator when the shopping mall is closed at night and the downtime of the escalator when it fails. A message requiring periodic maintenance is sent to the cloud 31 through the data transfer unit 13 when the calculated running time reaches a predetermined threshold.

Preferably, the data transfer unit may transmit a message to the cloud through 2G / 3G / 4G / 5G. Messages can be transmitted over long distances by 2G / 3G / 4G / 5G, enabling subsequent actions, including timely notification to management and maintenance personnel.

In general, the camera 11 may be positioned to directly align with the screen 21 as shown in FIG. 1. Wherein α is an angle of view of the camera 11. When the space in the control cabinet is large enough to be larger than the required technical distance between the camera 11 and the screen 21, that is, the camera 11 can be positioned such that the screen 21 is located in the field of view of camera 11, the camera 11 can be directly aligned with the screen 21.

FIG. 2 is a schematic diagram of a camera 11 according to the present invention using a mirror 14 to indirectly align with a screen 21. As shown in FIG. 2, when the space to directly align with the screen 21 is limited, and the camera 11 cannot be installed or a clear image cannot be obtained after installation, if there is a large size margin in the other dimension direction, a mirror 14 can be used to obtain images, and the camera 11 can be arranged in the direction with a large size margin to obtain images of the screen 21 in the mirror 14. That is, the real-time monitoring system 1 may further comprise a mirror 14 configured to project an image of the screen 31 to the camera 11 such that the camera 11 is indirectly aligned with the screen 21.

Preferably, the real-time monitoring system 1 may further comprise a bracket, the camera 11 is mounted on the bracket such that the camera can move horizontally and/or vertically and/or rotate by the bracket in order to align with the screen 21. The position of the camera 11 may be adjusted by the bracket to ensure that the camera 11 is aligned with the screen 21, and the position of the camera 11 can be adjusted after a period of use. Further, the bracket may be configured to adjust the position of the camera 11 automatically to ensure that the camera 11 is aligned with the screen 21.

Optionally, the camera 11 captures an image in a frequency range of every 0.1 second to every 1 second. By properly setting the frequency to capture images, all events can be recorded while saving energy.

The invention also provides an elevator or escalator, comprising the above-mentioned real-time monitoring system 1.

The invention also provides a method for real-time monitoring an elevator or escalator, the elevator or escalator comprises a control system arranged in a control cabinet, the control system comprises a screen configured to display control information, the method comprising: capturing an image of the screen in real time by a camera disposed in the control cabinet; recognizing the captured image as corresponding text data by a visual information processing board disposed in the control cabinet, and processing the text data to form a message to be transmitted; and transmitting the message from the visual information processing board to a cloud by a data transfer unit disposed in the control cabinet, wherein the cloud determines whether the elevator or escalator needs maintenance according to the message, and when the cloud determines that the elevator or escalator needs maintenance, an alarm is issued and/or a maintenance person is assigned to the maintenance.

This method completely isolates communication over ports of any control system, thus avoiding all risks that cause unexpected problems to the units. And because the visual recognition only depends on the information display inside the control cabinet, the information display exists in most cases no matter which manufacturer. Therefore, this technical solution can cover almost all elevators and escalators, and is suitable for almost all types of controllers, as long as the information display exists. Further, because the monitoring system is physically isolated from the control system, it can be used with the device more securely without adding more computing effort.

The method according to the present invention comprises one or more features similar to the above-mentioned real-time monitoring system, and details are not described herein again.

The exemplary embodiments of the real-time monitoring system, the elevator or escalator, and the method for real-time monitoring of an elevator or escalator provided by the present invention are described in detail above with reference to preferred embodiments. However, those skilled in the art can understand that on the premise of the inventive concept, a variety of variations and modifications can be made to the above specific embodiments, and various technical features and structures proposed by the present invention can be combined in various ways without exceeding the scope of the appended claims.

### Reference list

- 1: real-time monitoring system
- 11: camera
- 12: visual information processing board
- 13: data transfer unit
- 14: mirror
- 21: screen
- 31: cloud

## Claims

1. A real-time monitoring system (1) for an elevator or an escalator, the elevator or escalator comprises a control system arranged in a control cabinet, the control system comprises a screen (21) configured to display control information, the real-time monitoring system (1) is arranged in the control cabinet, and **characterized in that** the real-time monitoring system (1)comprises:
a camera (11) configured to capture an image of the screen (21) in real time;
a visual information processing board (12) configured to recognize the captured image as corresponding text data, and process the text data to form a message to be transmitted; and
a data transfer unit (13) configured to transmit the message from the visual information processing board (12) to a cloud (31),
wherein the cloud (31) determines whether the elevator or the escalator needs maintenance according to the message, and when the cloud (31) determines that the
elevator or escalator needs maintenance, an alarm is issued and/or a maintenance person is assigned to the maintenance.

2. The real-time monitoring system (1) according to claim 1, wherein the visual information processing board (12) includes a database associating a predetermined image having a specific feature with corresponding text data such that the visual information processing board (12) recognizes the captured image as corresponding text data by comparison between the captured image and the predetermined image.

3. The real-time monitoring system (1) according to claim 1 or 2, wherein the processing of the text data by the visual information processing board (12) comprises integrating successive identical text data for a predetermined time to avoid repeated message transmission.

4. The real-time monitoring system (1) according to any of the preceding claims 1 to 3, wherein the visual information processing board (12) is further configured to store the image and the text data, and the visual information processing board (12) is further configured to calculate statistical data and make the statistical data as part of the message, the statistical data comprises fault duration, running up time, running down time, and/or stopping service time.

5. The real-time monitoring system (1) according to any of the preceding claims 1 to 4, wherein the camera (11) is positioned to directly align with the screen (21), or the real-time monitoring system (1) further comprises a mirror (14) configured to project an image of the screen (21) to the camera (11) such that the camera (11) is indirectly aligned with the screen (21).

6. The real-time monitoring system (1) according to any of the preceding claims 1 to 5, wherein the real-time monitoring system (1) further comprises a bracket, the camera (11) is mounted on the bracket such that the camera (11) can move horizontally and/or vertically and/or rotate by the bracket in order to align with the screen (21).

7. The real-time monitoring system (1) according to any of the preceding claims 1 to 6, wherein the camera (11) captures an image in a frequency range of every 0.1 second to every 1 second.

8. An elevator or escalator, **characterized by** comprising a real-time monitoring system (1) according to any of the preceding claims 1-7.

9. A method for real-time monitoring an elevator or escalator, the elevator or escalator comprises a control system arranged in a control cabinet, the control system comprises a screen (21) configured to display control information, **characterized in that** the method comprising:
capturing an image of the screen (21) in real time by a camera (11) disposed in the control cabinet;
recognizing the captured image as corresponding text data by a visual information processing board (12) disposed in the control cabinet, and processing the text data to form a message to be transmitted; and
transmitting the message from the visual information processing board (12) to a cloud (31) by a data transfer unit (13) disposed in the control cabinet,
wherein the cloud (31) determines whether the elevator or escalator needs maintenance according to the message, and when when the cloud (31) determines that the
elevator or escalator needs maintenance, an alarm is issued and/or a maintenance person is assigned to the maintenance.

10. The method according to claim 9, wherein the visual information processing board (12) includes a database associating a predetermined image having a specific feature with corresponding text data, the method further comprises:
recognizing the captured image as corresponding text data through comparison between the captured image and the predetermined image by the visual information processing board (12).

11. The method according to claim 9 or 10, wherein the processing of the text data by the visual information processing board comprises integrating successive identical text data for a predetermined time to avoid repeated message transmission.

12. The method according to any of the preceding claims 9 to 11, wherein the method further comprises storing the image and the text data by the visual information processing board (12), and the method further comprises calculating statistical data and making the statistical data as part of the message by the visual information processing board (12), the statistical data comprises fault duration, running up time, running down time, and/or stopping service time.

13. The method according to any of the preceding claims 9 to 12, wherein the camera (11) is positioned to directly align with the screen (21), or the real-time monitoring system (1) further comprises a mirror (14) configured to project an image of the screen (21) to the camera (11) such that the camera (11) is indirectly aligned with the screen (21).

14. The method according to any of the preceding claims 9 to 13, wherein the camera (11) is mounted on a bracket such that the camera (11) can move horizontally and/or vertically and/or rotate by the bracket in order to align with the screen (21).

15. The method according to any of the preceding claims 9 to 14, wherein the camera (11) captures an image in a frequency range of every 0.1 second to every 1 second.

## Patentansprüche

1. Echtzeitüberwachungssystem (1) für einen Aufzug oder eine Fahrtreppe, wobei der Aufzug oder die Fahrtreppe ein Steuersystem umfasst, das in einem Steuerschrank angeordnet ist, das Steuersystem einen Bildschirm (21) umfasst, der dazu ausgelegt ist, Steuerinformationen anzuzeigen, das Echtzeitüberwachungssystem (1) im Steuerschrank angeordnet ist und **dadurch gekennzeichnet, dass** das Echtzeitüberwachungssystem (1) Folgendes umfasst:
eine Kamera (11), die dazu ausgelegt ist, ein Bild des Bildschirms (21) in Echtzeit aufzunehmen;
eine visuelle Informationsverarbeitungsplatine (12), die dazu ausgelegt ist, das aufgenommene Bild als entsprechende Textdaten zu erkennen und die Textdaten zu verarbeiten, um eine zu übertragende Nachricht zu bilden; und
eine Datentransfereinheit (13), die dazu ausgelegt ist, die Nachricht von der visuellen Informationsverarbeitungsplatine (12) zu einer Cloud (31) zu übertragen,
wobei die Cloud (31) gemäß der Nachricht bestimmt, ob der Aufzug oder die Fahrtreppe eine Wartung erfordert, und wenn die Cloud (31) bestimmt, dass der Aufzug oder die Fahrtreppe eine Wartung erfordert, ein Alarm ausgegeben und/oder eine Wartungsperson der Wartung zugeteilt wird.

2. Echtzeitüberwachungssystem (1) nach Anspruch 1, wobei die visuelle Informationsverarbeitungsplatine (12) eine Datenbank beinhaltet, die ein vorbestimmtes Bild mit einem spezifischen Merkmal mit entsprechenden Textdaten verknüpft, derart, dass die visuelle Informationsverarbeitungsplatine (12) das aufgenommenen Bild durch einen Vergleich zwischen dem aufgenommenen Bild und dem vorbestimmten Bild als entsprechende Textdaten erkennt.

3. Echtzeitüberwachungssystem (1) nach Anspruch 1 oder 2, wobei das Verarbeiten der Textdaten durch die visuelle Informationsverarbeitungsplatine (12) das Integrieren von nachfolgenden identischen Textdaten für eine vorbestimmte Zeit, um eine wiederholte Nachrichtenübertragung zu vermeiden, umfasst.

4. Echtzeitüberwachungssystem (1) nach einem der vorhergehenden Ansprüche 1 bis 3, wobei die visuelle Informationsverarbeitungsplatine (12) ferner dazu ausgelegt ist, das Bild und die Textdaten zu speichern, und die visuelle Informationsverarbeitungsplatine (12) ferner dazu ausgelegt ist, statistische Daten zu berechnen und die statistischen Daten zu einem Teil der Nachricht zu machen, wobei die statistischen Daten eine Fehlerdauer, eine Hochlaufzeit, eine Herunterlaufzeit und/oder eine Dienststoppzeit umfassen.

5. Echtzeitüberwachungssystem (1) nach einem der vorhergehenden Ansprüche 1 bis 4, wobei die Kamera (11) positioniert ist, um direkt auf den Bildschirm (21) ausgerichtet zu sein, oder das Echtzeitüberwachungssystem (1) ferner einen Spiegel (14) umfasst, der dazu ausgelegt ist, ein Bild des Bildschirms (21) zur Kamera (11) zu projizieren, derart, dass die Kamera (11) indirekt auf den Bildschirm (21) ausgerichtet ist.

6. Echtzeitüberwachungssystem (1) nach einem der vorhergehenden Ansprüche 1 bis 5, wobei das Echtzeitüberwachungssystem (1) ferner eine Halterung umfasst, die Kamera (11) an der Halterung montiert ist, derart, dass die Kamera (11) durch die Halterung horizontal und/oder vertikal bewegt und/oder gedreht werden kann, um sie auf den Bildschirm (21) auszurichten.

7. Echtzeitüberwachungssystem (1) nach einem der vorhergehenden Ansprüche 1 bis 6, wobei die Kamera (11) ein Bild in einem Frequenzbereich von alle 0,1 Sekunden bis jede 1 Sekunde aufnimmt.

8. Aufzug oder Fahrtreppe, der bzw. die **dadurch gekennzeichnet ist, dass** er bzw. sie ein Echtzeitüberwachungssystem (1) nach einem der vorhergehenden Ansprüche 1 bis 7 umfasst.

9. Verfahren für eine Echtzeitüberwachung eines Aufzugs oder einer Fahrtreppe, wobei der Aufzug oder die Fahrtreppe ein Steuersystem umfasst, das in einem Steuerschrank angeordnet ist, das Steuersystem einen Bildschirm (21) umfasst, der dazu ausgelegt ist, Steuerinformationen anzuzeigen, **dadurch gekennzeichnet, dass** das Verfahren Folgendes umfasst:
Erfassen eines Bildes des Bildschirms (21) in Echtzeit durch eine Kamera (11), die im Steuerschrank untergebracht ist;
Erkennen des aufgenommenen Bildes als entsprechende Textdaten durch eine visuelle Informationsverarbeitungsplatine (12), die im Steuerschrank untergebracht ist, und Verarbeiten Textdaten, um eine zu übertragende Nachricht zu bilden; und
Übertragen der Nachricht von der visuellen Informationsverarbeitungsplatine (12) zu einer Cloud (31) durch eine Datentransfereinheit (13), die im Steuerschrank untergebracht ist,
wobei die Cloud (31) gemäß der Nachricht bestimmt, ob der Aufzug oder die Fahrtreppe eine Wartung erfordert, und wenn die Cloud (31) bestimmt, dass der Aufzug oder die Fahrtreppe eine Wartung erfordert, ein Alarm ausgegeben und/oder eine Wartungsperson der Wartung zugeteilt wird.

10. Verfahren nach Anspruch 9, wobei die visuelle Informationsverarbeitungsplatine (12) eine Datenbank beinhaltet, die ein vorbestimmtes Bild mit einem spezifischen Merkmal mit entsprechenden Textdaten verknüpft, wobei das Verfahren ferner Folgendes umfasst:
Erkennen des aufgenommenen Bildes als entsprechende Textdaten mittels eines Vergleichs zwischen dem aufgenommenen Bild und dem vorbestimmten Bild durch die visuelle Informationsverarbeitungsplatine (12).

11. Verfahren nach Anspruch 9 oder 10, wobei das Verarbeiten der Textdaten durch die visuelle Informationsverarbeitungsplatine das Integrieren von nachfolgenden identischen Textdaten für eine vorbestimmte Zeit, um eine wiederholte Nachrichtenübertragung zu vermeiden, umfasst.

12. Verfahren nach einem der vorhergehenden Ansprüche 9 bis 11, wobei das Verfahren ferner das Speichern des Bildes und der Textdaten durch die visuelle Informationsverarbeitungsplatine (12) umfasst, und das Verfahren ferner das Berechnen von statistischen Daten und das Machen der statistischen Daten zu einem Teil der Nachricht durch die visuelle Informationsverarbeitungsplatine (12) umfasst, wobei die statistischen Daten eine Fehlerdauer, eine Hochlaufzeit, eine Herunterlaufzeit und/oder eine Dienststoppzeit umfassen.

13. Verfahren nach einem der vorhergehenden Ansprüche 9 bis 12, wobei die Kamera (11) positioniert ist, um direkt auf den Bildschirm (21) ausgerichtet zu sein, oder das Echtzeitüberwachungssystem (1) ferner einen Spiegel (14) umfasst, der dazu ausgelegt ist, ein Bild des Bildschirms (21) zur Kamera (11) zu projizieren, derart, dass die Kamera (11) indirekt auf den Bildschirm (21) ausgerichtet ist.

14. Verfahren nach einem der vorhergehenden Ansprüche 9 bis 13, wobei die Kamera (11) an der Halterung montiert ist, derart, dass die Kamera (11) durch die Halterung horizontal und/oder vertikal bewegt und/oder gedreht werden kann, um sie auf den Bildschirm (21) auszurichten.

15. Verfahren nach einem der vorhergehenden Ansprüche 9 bis 14, wobei die Kamera (11) ein Bild in einem Frequenzbereich von alle 0,1 Sekunden bis jede 1 Sekunde aufnimmt.

## Revendications

1. Système de surveillance en temps réel (1) pour un ascenseur ou un escalier mécanique, l'ascenseur ou l'escalier mécanique comprend un système de commande agencé dans une armoire de commande, le système de commande comprend un écran (21) configuré pour afficher des informations de commande, le système de surveillance en temps réel (1) est agencé dans l'armoire de commande, et **caractérisé en ce que** le système de surveillance en temps réel (1) comprend :
un appareil de prise de vues (11) configuré pour capturer une image de l'écran (21) en temps réel ;
une carte de traitement d'informations visuelles (12) configurée pour reconnaître l'image capturée comme des données textuelles correspondantes, et traiter les données textuelles pour former un message devant être émis ; et
une unité de transfert de données (13) configurée pour émettre le message, de la carte de traitement d'informations visuelles (12) vers un nuage (31),
dans lequel le nuage (31) détermine si l'ascenseur ou l'escalier mécanique nécessite une maintenance d'après le message, et lorsque le nuage (31) détermine que l'ascenseur ou l'escalier mécanique nécessite une maintenance, une alarme est émise et/ou un technicien de maintenance est affecté à la maintenance.

2. Système de surveillance en temps réel (1) selon la revendication 1, dans lequel la carte de traitement d'informations visuelles (12) inclut une base de données associant une image prédéterminée ayant une caractéristique spécifique avec des données textuelles correspondantes de sorte que la carte de traitement d'informations visuelles (12) reconnaisse l'image capturée comme des données textuelles correspondantes par une comparaison entre l'image capturée et l'image prédéterminée.

3. Système de surveillance en temps réel (1) selon la revendication 1 ou 2, dans lequel le traitement des données textuelles par la carte de traitement d'informations visuelles (12) comprend l'intégration de données textuelles identiques successives pendant une durée prédéterminée pour éviter une émission de message répétée.

4. Système de surveillance en temps réel (1) selon l'une quelconque des revendications 1 à 3 précédentes, dans lequel la carte de traitement d'informations visuelles (12) est en outre configurée pour stocker l'image et les données textuelles, et la carte de traitement d'informations visuelles (12) est en outre configurée pour calculer des données statistiques et amener les données statistiques à faire partie du message, les données statistiques comprennent une durée de panne, une durée de montée, une durée de descente et/ou un temps d'arrêt d'entretien.

5. Système de surveillance en temps réel (1) selon l'une quelconque des revendications 1 à 4 précédentes, dans lequel l'appareil de prise de vues (11) est positionné pour s'aligner directement avec l'écran (21), ou le système de surveillance en temps réel (1) comprend en outre un miroir (14) configuré pour projeter une image de l'écran (21) vers l'appareil de prise de vues (11) de sorte que l'appareil de prise de vues (11) soit indirectement aligné avec l'écran (21).

6. Système de surveillance en temps réel (1) selon l'une quelconque des revendications 1 à 5 précédentes, dans lequel le système de surveillance en temps réel (1) comprend en outre un support, l'appareil de prise de vues (11) est monté sur le support de sorte que l'appareil de prise de vues (11) puisse se déplacer horizontalement et/ou verticalement et/ou tourner grâce au support afin de s'aligner avec l'écran (21).

7. Système de surveillance en temps réel (1) selon l'une quelconque des revendications 1 à 6 précédentes, dans lequel l'appareil de prise de vues (11) capture une image dans une plage de fréquences de toutes les 0,1 seconde à toutes les 1 seconde.

8. Ascenseur ou escalier mécanique, **caractérisé par le fait qu'**il comprend un système de surveillance en temps réel (1) selon l'une quelconque des revendications 1 à 7 précédentes.

9. Procédé pour la surveillance en temps réel d'un ascenseur ou d'un escalier mécanique, l'ascenseur ou l'escalier mécanique comprend un système de commande agencé dans une armoire de commande, le système de commande comprend un écran (21) configuré pour afficher des informations de commande, **caractérisé en ce que** le procédé comprend :
la capture d'une image de l'écran (21) en temps réel par un appareil de prise de vues (11) disposé dans l'armoire de commande ;
la reconnaissance de l'image capturée comme des données textuelles correspondantes par une carte de traitement d'informations visuelles (12) disposée dans l'armoire de commande, et le traitement des données textuelles pour former un message devant être émis ; et
l'émission du message, de la carte de traitement d'informations visuelles (12) vers un nuage (31), par une unité de transfert de données (13) disposée dans l'armoire de commande,
dans lequel le nuage (31) détermine si l'ascenseur ou l'escalier mécanique nécessite une maintenance d'après le message, et lorsque le nuage (31) détermine que l'ascenseur ou l'escalier mécanique nécessite une maintenance, une alarme est émise et/ou un technicien de maintenance est affecté à la maintenance.

10. Procédé selon la revendication 9, dans lequel la carte de traitement d'informations visuelles (12) inclut une base de données associant une image prédéterminée ayant une caractéristique spécifique avec des données textuelles correspondantes, le procédé comprend en outre :
la reconnaissance de l'image capturée comme des données textuelles correspondantes par le biais d'une comparaison entre l'image capturée et l'image prédéterminée par la carte de traitement d'informations visuelles (12).

11. Procédé selon la revendication 9 ou 10, dans lequel le traitement des données textuelles par la carte de traitement d'informations visuelles comprend l'intégration de données textuelles identiques successives pendant une durée prédéterminée pour éviter une émission de message répétée.

12. Procédé selon l'une quelconque des revendications 9 à 11 précédentes, dans lequel le procédé comprend en outre le stockage de l'image et les données textuelles par la carte de traitement d'informations visuelles (12), et le procédé comprend en outre le calcul de données statistiques et le fait d'amener les données statistiques à faire partie du message par la carte de traitement d'informations visuelles (12), les données statistiques comprennent une durée de panne, une durée de montée, une durée de descente et/ou un temps d'arrêt d'entretien.

13. Procédé selon l'une quelconque des revendications 9 à 12 précédentes, dans lequel l'appareil de prise de vues (11) est positionné pour s'aligner directement avec l'écran (21), ou le système de surveillance en temps réel (1) comprend en outre un miroir (14) configuré pour projeter une image de l'écran (21) vers l'appareil de prise de vues (11) de sorte que l'appareil de prise de vues (11) soit indirectement aligné avec l'écran (21) .

14. Procédé selon l'une quelconque des revendications 9 à 13 précédentes, dans lequel l'appareil de prise de vues (11) est monté sur un support de sorte que l'appareil de prise de vues (11) puisse se déplacer horizontalement et/ou verticalement et/ou tourner grâce au support afin de s'aligner avec l'écran (21) .

15. Procédé selon l'une quelconque des revendications 9 à 14 précédentes, dans lequel l'appareil de prise de vues (11) capture une image dans une plage de fréquences de toutes les 0,1 seconde à toutes les 1 seconde.
